# DEMANDE DE BREVET EUROPEEN

(11) **EP 2 773 010 A1**
(43) Date de publication de la demande: **03.09.2014**
(21) Numéro de dépôt: 14157452.5
(22) Date de dépôt: 03.03.2014
(51) Int. Cl.: H02J 5/00, B61L 1/02, B61L 3/12

(54) **Générateur d'énergie électrique, alimentation électrique, capteur comportant une telle alimentation électrique**

(30) Priorité: 01.03.2013 FR 1351857
(71) Demandeur: Institut Français des Sciences et Technologies des Transports, de l'Aménagement et des Réseaux, 77420 Champs sur Marne (FR)
(72) Inventeur: Heddebaut, Marc, 59262 Sainghin en Melantois (FR); Deniau, Virginie, 59194 Raches (FR); Rioult, Jean, 59000 Lille (FR)
(74) Mandataire: Duflos, Bertrand Guillaume

(57) **Abrégé**

Générateur d'énergie électrique (50), comprenant une boucle conductrice (10) prévue pour être disposée dans un champ magnétique variable, de manière à être parcourue par un courant induit, un convertisseur courant-tension (20) apte à partir du courant induit dans la boucle à générer une tension électrique et à délivrer une énergie électrique, et un redresseur (30), apte à fournir en sortie une tension non-alternative à partir de la tension générée par le convertisseur.

Le convertisseur comprend une inductance (L) comportant des spires enroulées autour de la boucle.

Avantageusement le générateur peut fournir de l'énergie électrique de manière autonome à partir des variations du champ magnétique environnant.

L'invention vise également une alimentation électrique, un capteur comportant une alimentation électrique, et un véhicule roulant comportant l'un des éléments précités.

## Description

L'invention concerne un générateur d'énergie électrique. Elle concerne plus particulièrement un générateur d'énergie électrique pouvant être utilisé pour fournir de l'énergie électrique à un dispositif de stockage d'énergie électrique faisant partie d'une alimentation électrique.

Le terme 'Alimentation électrique' désigne ici de manière large tout dispositif capable d'alimenter un équipement électrique en électricité.

L'invention vise le cas particulier dans lequel l'équipement électrique à alimenter est isolé ou distant, de telle sorte qu'il n'est pas possible (ou du moins trop coûteux) de l'alimenter en électricité par fil.

De manière connue, dans de tels cas, l'équipement électrique peut être alimenté par une alimentation électrique tirant son énergie de panneaux solaires ou d'éoliennes.

Cependant, chacune de ces solutions présente certains inconvénients : Notamment, leur dépendance aux conditions météorologiques, et des besoins de maintenance non négligeables.

L'objectif de l'invention est donc de proposer un générateur d'énergie électrique pouvant être utilisé pour fournir de l'énergie électrique à une alimentation électrique, le générateur d'énergie électrique ne nécessitant aucun raccordement physique à une source d'énergie, et nécessitant une maintenance réduite.

Cet objectif est atteint grâce au fait que le générateur d'énergie électrique comprend :
au moins une boucle conductrice prévue pour être disposée dans un champ magnétique variable, de manière à être parcourue par un courant induit ;
un convertisseur courant-tension, apte à partir d'un courant induit dans ladite au moins une boucle à générer une tension électrique et à délivrer une énergie électrique, le convertisseur comprenant une inductance comportant des spires enroulées autour de ladite au moins une boucle ; et un redresseur, apte à fournir en sortie une tension non-alternative à partir de la tension générée par le convertisseur.

Dans ce générateur, ladite au moins une boucle conductrice, considérée en tant que circuit électrique, a pour fonction première de générer un courant induit à partir des variations du champ magnétique ambiant.

Cette boucle conductrice peut notamment être à noyau vide ('bobine à air') ou du moins ne comportant pas de pièce en matériau ferromagnétique dans son noyau.

Par ailleurs, l'invention vise principalement un générateur dans lequel cette boucle conductrice n'est pas placée dans le champ magnétique généré par un circuit primaire dont la fonction principale est précisément de générer ce champ magnétique. Ainsi dans le domaine d'application préférentiel de l'invention, ladite au moins une boucle conductrice ne constitue donc pas (ni même ne comprend) un circuit secondaire d'un transformateur électrique.

Un générateur d'énergie électrique selon l'invention n'assure pas sa fonction en toutes circonstances. Il ne fonctionne que lorsqu'il est placé dans un champ magnétique variable.

Lorsqu'il est placé dans un tel champ magnétique, et sous réserve que sa boucle conductrice ne soit pas placée dans la direction de propagation du champ magnétique, celle-ci est parcourue par un courant induit par le champ magnétique.

Le convertisseur courant-tension permet alors de convertir le courant induit en une tension. Celle-ci est enfin redressée par le redresseur.

L'action du redresseur assure la fourniture d'une tension non-alternative en sortie du générateur. Par 'tension non-alternative', on désigne ici une tension qui conserve un signe constant au fil du temps. Cela permet notamment que lorsque le générateur d'énergie électrique est branché aux bornes d'un dispositif de stockage d'énergie électrique, le signe de la tension à laquelle celui-ci est soumis est prédéterminé. Par suite, le courant généré entre le générateur d'énergie électrique et le dispositif de stockage d'énergie électrique circule toujours dans le même sens. Ce sens est choisi naturellement de telle sorte que le générateur d'énergie électrique fonctionne comme chargeur vis-à-vis du dispositif de stockage d'énergie, alimentant ainsi celui-ci en énergie électrique.

De préférence, le générateur d'énergie électrique selon l'invention ne comporte aucun filtre fréquentiel.

De préférence, le générateur d'énergie électrique selon l'invention ne comporte aucun composant ayant une réponse spécifique en fonction de la fréquence.

Par suite, le générateur d'énergie électrique est apte à fonctionner sur une large bande de fréquences. Il permet donc de collecter la plus grande partie de l'énergie captée par la boucle conductrice sur une large bande de fréquences.

Cette caractéristique est particulièrement intéressante lorsque les champs magnétiques auxquels est exposée la boucle conductrice sont de fréquences très diverses.

Différents perfectionnements peuvent être apportés au générateur d'énergie électrique, seuls ou en combinaison.

Dans un mode de réalisation, le redresseur peut être simple alternance ou double alternance. En particulier, le redresseur peut comprendre une ou plusieurs diode(s) Schottky.

Il peut encore comporter un sous-circuit de prépolarisation pour la prépolarisation de(s) diode(s) du redresseur (la prépolarisation consiste ici à porter à un potentiel prédéterminé, non nul, l'anode d'une ou plusieurs diode(s)).

Par ailleurs, comme indiqué précédemment le convertisseur selon l'invention comprend une inductance comportant des spires enroulées autour de la ou des boucles conductrices.

L'agencement de cette inductance avec des spires enroulées autour de la ou des boucles conductrices permet de manière efficace et fiable que le convertisseur courant-tension produise une tension et fournisse de l'énergie électrique à partir du courant induit dans la ou les boucles conductrices.

Deux modes de réalisation peuvent notamment être envisagés pour réaliser l'inductance :
Dans un premier mode de réalisation, l'inductance comporte un bobinage enroulé autour de la ou des boucles et présentant une borne d'entrée et une borne de sortie ; la borne d'entrée est reliée à une masse du générateur ; la tension générée par le convertisseur est délivrée par la borne de sortie.
   Le redresseur est alors de préférence constitué principalement par une diode, et a alors un fonctionnement simple alternance. Selon une variante, le redresseur est constitué principalement par un pont de Graëtz de diodes ; il assure alors un redressement double alternance.
Dans un second mode de réalisation, l'inductance comporte deux bobinages reliés en série, chacun étant enroulé autour de la ou des boucles conductrices et comportant une borne d'entrée et une borne de sortie ; les bornes d'entrée sont reliées conjointement à une masse du générateur ; la tension générée par le générateur est délivrée par les bornes de sortie.
   Le redresseur est alors double alternance, et présente un meilleur rendement énergétique qu'un redresseur ayant un fonctionnement simple alternance.

Dans ce mode de réalisation, le redresseur est de préférence constitué principalement par deux diodes, reliées respectivement en série aux bornes de sortie.

Une application importante de l'invention concerne le transport ferroviaire ou routier. Les voies ferrées et les routes en effet forment une infrastructure extrêmement étendue. Par suite, il peut s'avérer difficile d'alimenter en électricité des équipements électriques liés aux voies (que ce soient des voies ferrées ou des routes) ou circulant sur ces voies.

En revanche, il existe différentes situations dans lesquelles un champ magnétique variable est disponible sur ces voies ou à proximité de celles-ci.

Un exemple de telle situation concerne les voies ferrées sur lesquelles circulent des trains à propulsion électrique, appelés encore trains électriques.

Lorsqu'un train électrique circule, une boucle de circulation de courant est formée par le fil de contact de la caténaire, le pantographe, le moteur de traction, le rail, et la sous-station électrique alimentant cette boucle de circulation.

Lors du mouvement des trains, la boucle de circulation génère un champ magnétique intense. De plus, les non-linéarités présentes aux contacts ligne de contact-pantographe et roue-rail ainsi que celles de l'électronique de puissance embarquée à bord du train font qu'une partie de l'énergie électrique consommée par le train est transformée en des courants parasites qui parcourent la boucle de circulation. Ces courants parasites sont de plus haute fréquence que celle du courant d'alimentation du train. Par suite, la fréquence de variation des champs magnétiques émis par ces courants parasites est relativement élevée : elle varie de quelques kHz à quelques dizaines de MHz.

Avantageusement, le générateur d'énergie électrique selon l'invention peut être disposé à proximité d'une voie ferrée sur laquelle circulent des véhicules électriques, notamment des trains électriques. Il permet alors de fournir de l'électricité à partir du rayonnement magnétique indiqué précédemment, généré par la boucle de circulation précitée lors du passage des véhicules ou trains électriques.

Dans ce cas, la ou les boucles conductrices du générateur ne sont pas constituées, même partiellement, par le circuit de courant électrique de haute puissance servant à l'alimentation des trains ou véhicules à propulsion électrique.

Avantageusement, le générateur selon l'invention ne fonctionne pas uniquement au moment du passage des trains, mais capte des variations du champ magnétique et les convertit en énergie électrique dès qu'un courant électrique circule dans la boucle caténaire / rails /sous-station électrique, et cela même si les trains à l'origine de ce courant circulent à plusieurs kilomètres du générateur d'énergie électrique.

De manière générale selon l'invention, pour augmenter les performances du générateur, la ou les boucles conductrices sont de préférence prévues de grande surface (la surface d'une boucle désigne ici l'aire de la surface circonscrite par la ou les boucles conductrices).

La ou les boucles conductrices ont de préférence une surface supérieure à 1m², par exemple - mais pas uniquement - dans l'application ferroviaire citée précédemment, c'est-à-dire lorsque le générateur sert à générer du courant à partir de champs magnétiques engendrés par la circulation de trains à propulsion électrique.

Un mode de réalisation avantageux de la boucle conductrice du générateur consiste à incorporer dans la boucle conductrice du générateur d'énergie électrique certains éléments, notamment en acier ou en aluminium, déjà existants, par exemple au bord d'une voie ferrée. Par exemple, la ou les boucle(s) conductrice(s) peu(ven)t comporter un élément conducteur principalement en acier ou en aluminium, notamment constituant un élément d'armement d'une voie ferrée (Un élément d'armement d'une voie ferrée est un élément d'équipement d'une voie ferrée).

Naturellement, le générateur selon l'invention peut être mis en oeuvre dans différents environnements, notamment au voisinage des voies de circulation de trolley-bus, tramways électriques, voire camions ou véhicules électriques circulant sur des voies électrifiées qui les alimentent en électricité. Plus généralement, il peut être mis en oeuvre au voisinage de tout équipement générant un champ magnétique, sous réserve que l'énergie induite par celui-ci soit suffisante au regard de la consommation électrique de l'équipement que le générateur doit alimenter.

Dans le cas d'une mise en oeuvre du générateur d'énergie électrique à proximité d'une voie ferrée sur laquelle circulent des trains électriques, le champ magnétique émis peut être considérable. Par suite, le courant induit dans la boucle conductrice peut éventuellement être considérable.

Dans un mode de réalisation, le générateur d'énergie électrique comporte un dispositif de protection contre les surtensions. Un tel dispositif empêche la tension entre deux points du circuit de dépasser une valeur prédéterminée. Un tel dispositif peut être constitué principalement par une ou plusieurs diodes Zener, ou encore au moyen de composant(s) électronique(s) parasurtenseur(s), disposé(e)(s) entre les lignes ou bornes à protéger contre les surtensions.

L'invention concerne également une alimentation électrique, comprenant un dispositif de stockage d'énergie électrique, et un générateur d'énergie électrique tel que défini précédemment, relié au dispositif de stockage et apte à stocker dans celui-ci l'énergie électrique qu'il génère.

Avantageusement, l'alimentation électrique ainsi définie ne nécessite ni raccordement à une source d'énergie ni apport périodique d'énergie, dès lors qu'elle est exposée à un champ magnétique variable diffusant une énergie suffisante.

Dans un mode de réalisation, le dispositif de stockage comprend un supercondensateur, un condensateur, ou une batterie. Par 'supercondensateur', on désigne ici un composant ou ensemble de composant électronique(s) présentant une capacité comprise entre quelques Farad et quelques milliers de Farad ; il s'agit le plus souvent d'un condensateur à double-couche électrique (EDLC).

Différents équipements peuvent être alimentés par une alimentation électrique telle que définie précédemment. L'invention est applicable notamment à un capteur, comportant une alimentation électrique telle que définie précédemment, cette alimentation assurant (au moins partiellement, par exemple dans un mode de fonctionnement dégradé) l'alimentation en énergie du capteur. Par capteur, on désigne ici un dispositif apte à acquérir et transmettre une information.

Dans un mode de réalisation, le capteur comporte en outre un émetteur apte à émettre sans fil une information, par exemple par ondes électromagnétiques.

Un tel capteur peut être fixe, en étant placé au sol ou relié au sol. Il peut cependant être également agencé pour être monté à bord d'un véhicule roulant, notamment un wagon pour voie ferrée. Il peut en outre par exemple incorporer dans la boucle conductrice un élément, notamment en acier ou en aluminium, constituant un élément de structure du véhicule roulant. En effet, le rayonnement magnétique émis lors du passage du véhicule peut également être capté à bord du véhicule.

Par suite, l'invention concerne également un véhicule roulant, notamment un wagon pour voie ferrée, comportant un générateur d'énergie électrique, ou une alimentation électrique, ou un capteur, tel(le) que défini(e) précédemment.

L'intérêt de cette application de l'invention est de proposer un système particulièrement simple pour alimenter des véhicules roulants en énergie électrique. En particulier, de manière générale, les wagons de fret ne disposent pas de source d'alimentation électrique à bord. L'invention permet donc de doter ceux-ci d'une source d'énergie électrique, certes relativement peu puissante, mais fiable et économique. Cette source d'énergie peut être utilisée pour alimenter un système de géolocalisation (GPS) permettant la géolocalisation des wagons. Elle peut aussi être utilisée pour alimenter des répéteurs de signaux radios, aptes à relayer des signaux radios d'une partie à l'autre du train, lorsque l'environnement du train perturbe la transmission des signaux radios dans l'air et rend nécessaire l'utilisation de répéteurs, en particulier pour des trains de grande longueur.

L'invention comporte enfin un procédé de génération d'une énergie électrique. Ce procédé comprend les étapes suivantes :
a) on dispose une ou des boucle(s) conductrice(s) au voisinage d'une voie ferrée sur laquelle circulent des véhicules, notamment des trains, à alimentation électrique (c'est-à-dire, à moins de quelques dizaines de mètres, et de préférence à moins de 10 mètres, de celle-ci) ;
b) on génère une énergie électrique à partir du ou des courant(s) induit(s) dans la ou les boucle(s).

Le procédé comporte de préférence une étape :
c) on redresse la tension obtenue en sortie au cours de l'étape b) de telle sorte que celle-ci soit une tension non-alternative.

L'invention englobe enfin un procédé d'alimentation électrique comportant les étapes suivantes :
A) On génère une énergie électrique suivant le procédé décrit ci-dessus ;
B) On stocke l'énergie produite dans un ou des condensateur(s), et/ou un ou des supercondensateurs, et/ou une ou des batterie(s) ;
C) On alimente un équipement électrique avec l'énergie électrique ainsi stockée.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'une alimentation selon l'invention, dans un premier mode de réalisation ;
- la figure 2 est une vue schématique d'une alimentation selon l'invention, dans un deuxième mode de réalisation ; et
- la figure 3 est une vue schématique d'une alimentation selon l'invention, dans un troisième mode de réalisation ; et
- la figure 4 est une vue schématique montrant des capteurs selon l'invention prévus pour être alimentés par l'énergie rayonnée au passage de trains électriques.

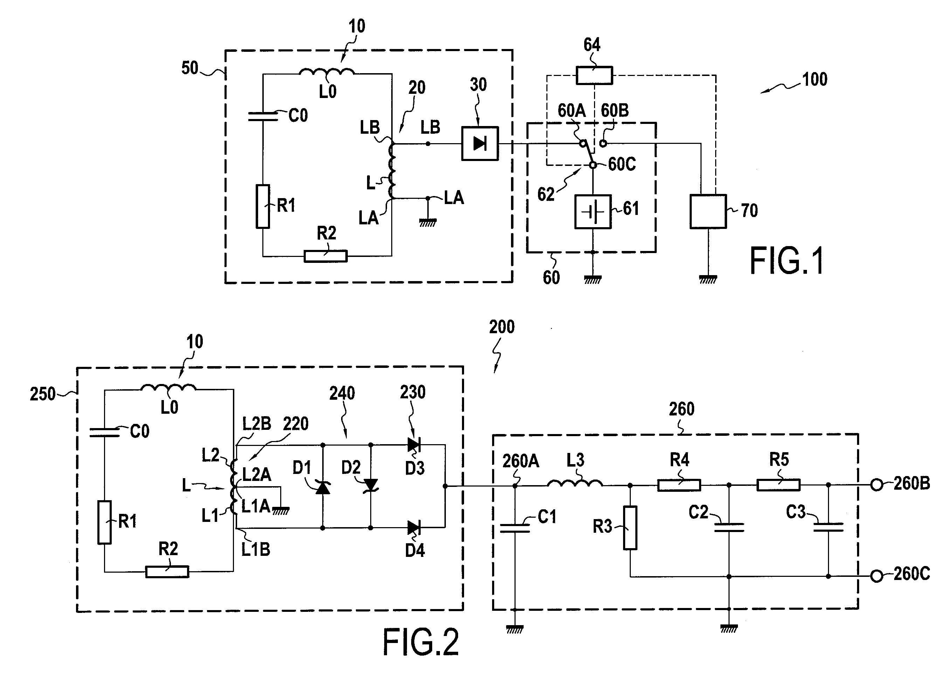

La figure 1 représente une alimentation électrique 100 selon l'invention, dans un premier mode de réalisation.

L'alimentation 100 comprend un dispositif de stockage d'énergie électrique 60, constitué essentiellement par une batterie 61, et un générateur d'énergie électrique 50. Sur la figure 1, l'alimentation 100 est représentée connectée à un équipement électrique 70 qu'elle alimente en courant électrique. Elle est en outre contrôlée par une unité de gestion de l'énergie électrique 64, dont le rôle sera précisé plus loin.

Le générateur d'énergie électrique 50 comprend une boucle conductrice 10, un convertisseur courant-tension 20, et un redresseur 30.

La boucle conductrice 10 est constituée par une spire d'un conducteur en cuivre. Naturellement, dans d'autres modes de réalisation, il est possible d'utiliser un conducteur présentant plusieurs spires (plutôt qu'une seule), et/ou plusieurs conducteurs formés en forme de spire, disposés en parallèle.

Pour un fonctionnement efficace, le plan de la boucle 10 doit être autant que possible perpendiculaire à la direction de propagation du champ magnétique. Sous cette contrainte, la forme de la boucle 10 peut être quelconque, par exemple circulaire, rectangulaire, etc.

Sur la figure 1, la boucle 10 est représentée conventionnellement par son schéma équivalent. Elle est donc représentée par un circuit fermé comportant une inductance de boucle L0, un condensateur C0, et deux résistances R1 et R2. La résistance R1 représente la résistance de rayonnement de la boucle, et la résistance R2 représente la résistance due aux effets Joule générés dans la boucle.

De préférence, la résistance R2 doit être la plus faible possible (typiquement, bien inférieure à 1 Ω). Dans ce but, on utilise pour réaliser la boucle magnétique 10 un matériau de conductivité électrique très élevée, et l'on prévoit un conducteur de grande section pour le passage du courant.

Lorsque la boucle 10 est exposée à un champ magnétique variable, un courant est induit dans celle-ci.

L'énergie de ce courant est captée par le convertisseur courant-tension 20.

Ce convertisseur courant-tension 20 est constitué par une inductance L, dont les spires sont disposées autour d'un brin de la boucle 10.

L'inductance L est agencée de manière à générer une tension électrique à partir du courant induit dans la boucle 10. Avantageusement, l'inductance L n'introduit pas de résistance complémentaire en série dans la boucle magnétique 10.

L'inductance L comporte un bobinage unique enroulé autour d'une branche de la boucle 10. L'utilisation d'une inductance agencée de cette manière permet d'isoler électriquement la boucle conductrice 10 du dispositif de stockage d'énergie électrique 60. La borne d'entrée LA de ce bobinage est reliée à la masse du générateur. La borne de sortie LB est reliée à une borne d'anode du redresseur 30, à laquelle elle applique la tension générée par le convertisseur.

Le redresseur 30 est un dispositif à diode, constitué éventuellement par une diode unique, notamment de type Schottky. Il est agencé de manière à fournir en sortie une tension non-alternative, à partir de la tension générée par l'inductance (le convertisseur courant-tension) 20.

La borne de sortie du redresseur 30 est reliée à une borne de charge 60A de la batterie 60. La batterie 60 comporte en outre une borne de décharge 60B.

Le fonctionnement de l'alimentation 100 est piloté par l'unité de gestion de l'énergie 64. En pilotant la position d'un interrupteur 62, cette unité 64 commande le raccordement de la batterie (via sa borne 60C) soit à la borne de charge 60A, soit à sa borne de décharge 60B, selon que l'on veut permettre la charge de la batterie, ou son fonctionnement en tant que source de courant pour l'équipement 70 connecté à la borne 60B de la batterie.

L'unité de gestion de l'énergie 64 est reliée à la borne 60C de la batterie 60. Grâce à cette connexion, elle suit l'évolution de la tension à cette borne, et transmet à l'équipement 70 une information quant à l'état de charge de la batterie.

Le fonctionnement de l'alimentation 100 est le suivant.

Lorsque le champ magnétique auquel est exposé la boucle 10 varie, des courants sont induits dans la boucle 10. Ces courants sont convertis en une tension par le convertisseur courant-tension 20. Sous l'effet de cette tension, redressée par le redresseur de courant 30, des courants de charge circulent en sortie du générateur d'énergie électrique 50 et chargent le dispositif de stockage d'énergie 60 (la batterie 61). Les courants de charge successifs sont stockés au fil de l'eau par la batterie 61, qui joue ainsi un rôle d'intégrateur en sommant les arrivées successives d'énergie, qui peuvent être aléatoires.

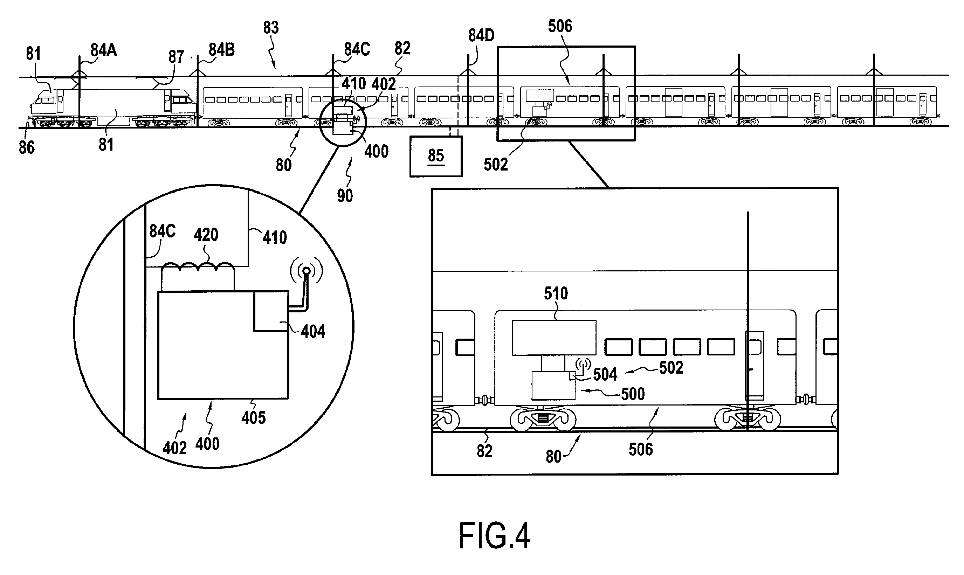

La figure 2 représente une alimentation 200 qui constitue un second mode de réalisation de l'invention. L'intégration de l'alimentation 200 au sein d'un capteur sera présentée plus loin en relation avec la figure 4.

Dans les figures, les éléments correspondants ou identiques dans différents modes de réalisation portent le même signe de référence.

L'alimentation 200 comporte un générateur d'énergie électrique 250, et un dispositif de stockage d'énergie électrique constitué par un supercondensateur 260.

Le générateur d'énergie électrique 250 comprend une boucle conductrice 10, un convertisseur courant-tension 220, un redresseur 230, et un dispositif de protection contre les surtensions 240.

La boucle conductrice 10 est identique à celle de l'alimentation 100.

Le convertisseur courant-tension 220 est constitué comme précédemment par une inductance L dont les spires sont disposées autour d'un brin de la boucle 10. L'inductance L isole électriquement la boucle conductrice 10 du dispositif de stockage d'énergie électrique 260.

Cependant, dans ce mode de réalisation l'inductance L comporte deux bobinages L1 et L2 reliés en série. Chacun de ces bobinages comporte une borne d'entrée (bornes L1A, L2A) et une borne de sortie (L1B, L2B). Les bornes d'entrée L1A, L2A sont reliées conjointement à la masse ; deux tensions de phase opposées sont générées par le convertisseur 220 et délivrées par les bornes de sortie L1B, L2B.

Chacune des bornes L1B et L2B est reliée à l'anode d'une diode de type Schottky D3, D4. Les diodes D3 et D4 constituent le redresseur 230. Ces diodes permettent de fournir en sortie, c'est-à-dire sur leurs cathodes respectives, une tension non-alternative à partir de la tension générée par l'inductance (le convertisseur courant-tension) 220.

Afin de protéger le supercondensateur contre les surtensions, le générateur d'énergie électrique 250 comprend en outre un dispositif 240 de protection contre les surtensions. Ce dispositif protège l'alimentation 250 contre les surtensions qui pourraient survenir en cas d'exposition de la boucle 10 à un champ magnétique particulièrement intense. Le dispositif 40 est constitué par deux diodes Zener D1 et D2, disposées en sens contraire (ou tête-bêche) de manière à relier en parallèle les bornes L1B et L2B.

Dans un autre mode de réalisation, le dispositif de protection contre les surtensions 240 peut être réalisé en remplaçant les diodes Zener D1 et D2 par d'autres composants électroniques parasurtenseurs (diodes Transil, etc.), le reste du circuit restant inchangé.

Notons que le générateur d'énergie électrique 50 présenté sur la figure 1 pourrait lui aussi être doté d'un dispositif de protection contre les surtensions. Celui-ci pourrait ainsi être constitué par deux diodes identiques aux diodes D1 et D2, ou par d'autres composants électroniques parasurtenseurs, disposé(e)s en parallèle entre les bornes LA et LB (même agencement que sur la figure 2). Selon un autre mode de réalisation, ce dispositif de protection pourrait ne comporter qu'une seule diode Zener, (ou composant parasurtenseur), dont l'anode serait branchée à la borne LA et la cathode à la borne LB.

Les cathodes des diodes D3 et D4 sont reliées à une borne d'alimentation du supercondensateur 260 (borne 260A).

Le supercondensateur 260 est agencé et dimensionné de manière à pouvoir stocker l'énergie électrique produite par le générateur d'énergie électrique 50 sous l'effet du champ magnétique variable auquel il est exposé.

Le supercondensateur 260 est représenté sur la figure 1 par son schéma équivalent, sur lequel :
La borne 260A est reliée à la terre via un condensateur C1. La borne 260A est reliée par ailleurs à deux bornes de sortie 260B et 260C. Le supercondensateur 260 comporte les composants équivalents suivants : une inductance L3 ; deux capacités C2 et C3 ; et trois résistances R3, R4 et R5.

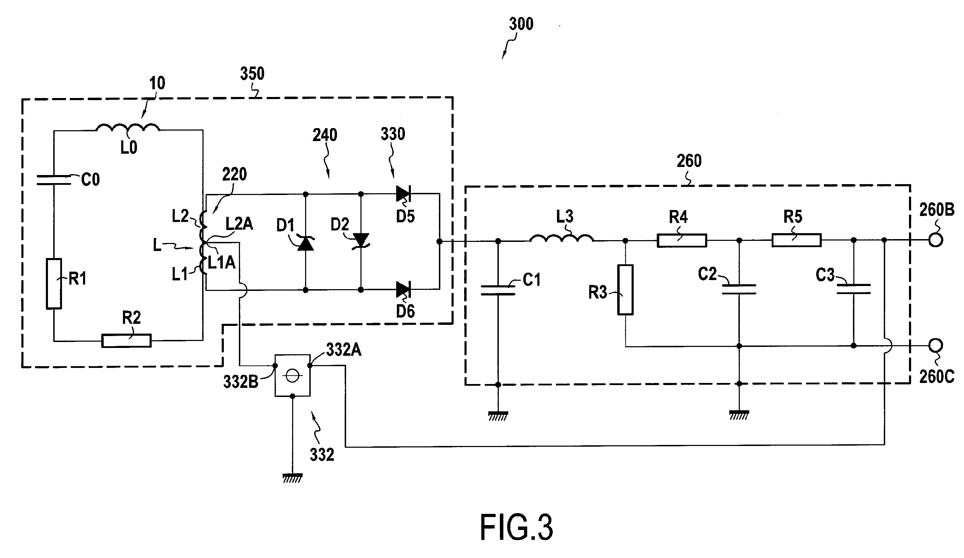

La figure 3 illustre maintenant une alternative aux dispositifs à base de diodes de type Schottky pour réaliser le redresseur de courant, dans un générateur d'énergie électrique selon l'invention.

Il est en effet possible de réaliser un redresseur de courant de la manière illustrée par la figure 3. Cette figure représente une alimentation 300 selon l'invention, qui constitue un troisième mode de réalisation de l'invention.

L'alimentation 300 comporte un dispositif de stockage d'énergie électrique constitué par un supercondensateur 260, et un générateur d'énergie électrique 350.

Le générateur d'énergie électrique 350 comprend une boucle conductrice 10, un convertisseur courant-tension 220, un redresseur 330, et un dispositif de protection contre les surtensions 240.

La boucle conductrice 10, le convertisseur courant-tension 220, le dispositif de protection contre les surtensions 240 et le supercondensateur 260 sont identiques aux composants correspondants de l'alimentation 200.

La spécificité de l'alimentation 300 réside donc dans l'agencement du redresseur 330. Celui-ci comporte deux diodes D5 et D6 qui sont intégrées aux mêmes emplacements que les diodes D3 et D4 dans l'alimentation 200 et sont identiques à celles-ci.

Le redresseur 330 comporte également un dispositif de prépolarisation 332. Celui-ci est composé essentiellement par un générateur de tension de faible impédance interne. Ce générateur de tension est relié en entrée (borne 332A) à la borne de sortie 260B du dispositif de stockage de courant, c'est-à-dire le supercondensateur 260. Le générateur 332 utilise donc la tension de sortie du dispositif de stockage de courant pour délivrer une tension constante, dite tension de prépolarisation, sur sa borne de sortie 332B. La tension de prépolarisation est choisie au moins égale à la tension de seuil de la ou des diodes du redresseur, à savoir dans l'exemple présenté, les diodes D5 et D6.

La tension de prépolarisation est appliquée à la borne d'entrée commune (L1A-L2A) de l'inductance L.

En l'absence de courant dans la boucle conductrice 10, la tension de prépolarisation est appliquée via les bobinages L1 et L2 à l'anode des diodes D5 et D6 du redresseur 330.

Grâce à l'application de cette tension, même si la tension de seuil des diodes D5 et D6 est relativement élevée, dès qu'un courant même relativement faible circule dans la boucle 10, la tension produite en sortie du convertisseur courant-tension 220 (aux bornes de sortie de l'inductance L) est suffisante pour pouvoir générer un courant à travers l'une des diodes D5 et D6 et ainsi, pour contribuer à charger le supercondensateur 260.

Avantageusement, dans le dispositif de prépolarisation 332, le courant nécessaire à la prépolarisation des diodes D5 et D6 est très faible (de l'ordre de quelques microampères). Ainsi, le fonctionnement du dispositif 334 ne grève pas le rendement énergétique de l'alimentation 300.

La figure 4 illustre maintenant la mise en oeuvre de l'invention en utilisant le champ magnétique rayonné lors du passage d'un train électrique sur une voie ferrée.

Sur la figure 4 est représentée une voie ferrée 80 sur laquelle circule une locomotive électrique 81. Cette locomotive est reliée à une ligne de contact 82 faisant partie d'une caténaire 83.

La caténaire 83 est elle-même supportée par des poteaux régulièrement espacés 84A, 84B, 84C, 84D, etc.

La locomotive 81 est alimentée en courant électrique par la ligne de contact 82 via un pantographe 87. La ligne de contact 82 est elle-même alimentée depuis une sous-station électrique 85. Le courant électrique de retour circule dans les rails 86 de la voie ferrée 80.

Les rails 86 de la sous-station à la locomotive 81, la locomotive 81 et le pantographe 83, la ligne de contact entre la locomotive 81 et la sous-station 85, forment une boucle primaire 90 de circulation de courant, dans laquelle circule un courant très intense fonction des actions de traction et de freinage avec récupération d'énergie des trains circulant sur ce tronçon de ligne.

Comme indiqué précédemment, les non-linéarités présentes aux contacts ligne de contact-pantographe et roue-rail ainsi que générées par l'électronique de puissance embarquée à bord du train entraînent qu'une partie de l'énergie électrique absorbée par le train est retransmise à la boucle primaire 90 sous forme de courants parasites, qui engendrent des champs magnétiques de plus haute fréquence que celle de l'alimentation du train (L'alimentation des trains a généralement une fréquence de 50 Hertz ou 16²/₃ Hertz, ou peut également être en courant continu).

Un capteur 402 selon l'invention fixé au sol est disposé au voisinage du poteau 84C. Ce capteur comporte une alimentation électrique 400 du même type de l'alimentation électrique 100 décrite précédemment, qui assure son alimentation en énergie.

Sur la figure 4, les principaux composants de l'alimentation 400 qui sont représentés sont une boucle magnétique 410 et un convertisseur courant-tension 420. Les autres composants de l'alimentation 400 sont groupés dans un boîtier électronique 405, avec les autres composants du capteur 400.

La boucle magnétique 410 est constituée d'une part, par une portion conductrice (en acier ou en aluminium) du poteau 84C, et d'autre part, complétée par du fil conducteur de fort diamètre. La boucle magnétique 410 a une forme rectangulaire et est placée dans un plan vertical parallèle aux rails 86 à proximité immédiate de ceux-ci. Sa surface est de quelques mètres carrés.

Le capteur 402 peut être un capteur de tout type (température, pression, etc.). Il est autonome en énergie grâce à l'alimentation 400.

Le capteur 402 est équipé en outre d'un émetteur 404 (en l'occurrence un émetteur radio) grâce auquel il transmet (sans fil) les informations qu'il mesure ou acquiert.

Sur la figure 4 est également représenté un véhicule roulant, en l'occurrence un wagon 506.

Dans ce wagon est agencé un répéteur radio 502. Ce répéteur est alimenté par une alimentation 500 du même type que l'alimentation électrique 100 décrite précédemment.

L'alimentation comporte une boucle conductrice 510 fixée ou intégrée à une paroi de ce wagon (une paroi verticale et parallèle aux rails). Cette boucle 510 est soumise aux variations du champ magnétique émis par la boucle primaire 90. Elle est donc parcourue par des courants induits. L'énergie ainsi collectée est stockée dans le dispositif de stockage d'énergie électrique de l'alimentation 500 et permet l'alimentation du répéteur 502.

Le répéteur 502 a la fonction suivante.

Il est utilisé lorsque le train dont fait partie le wagon 506 est très long, de telle sorte que ce train comporte aux moins deux locomotives relativement éloignées. Le répéteur radio 502 est alors placé sur un wagon (506) situé à une position intermédiaire entre ces locomotives.

Lorsque le train circule, les locomotives échangent entre elles des signaux radio qui servent à synchroniser les deux locomotives.

Le répéteur 502 est agencé de manière à recevoir les signaux émis par une locomotive, et les retransmettre après amplification à l'autre locomotive. Autonome en énergie, le répéteur 502 peut être installé dans tout wagon. Dans la mesure où il capte ou acquiert une information, puis la retransmet via un émetteur-récepteur radio intégré 504, le répéteur 502 constitue un capteur au sens du présent document.

## Revendications

1. Générateur d'énergie électrique (50, 250, 350), comprenant au moins une boucle conductrice (10, 410, 510) prévue pour être disposée dans un champ magnétique variable, de manière à être parcourue par un courant induit ;
un convertisseur courant-tension (20, 220), apte à partir du courant induit dans ladite au moins une boucle à générer une tension électrique et à délivrer une énergie électrique, le convertisseur comprenant une inductance (L) comportant des spires enroulées autour de ladite au moins une boucle ; et
un redresseur (30, 230,330), apte à fournir en sortie une tension non-alternative à partir de la tension générée par le convertisseur.

2. Générateur d'énergie électrique selon la revendication 1, dont le redresseur (30,230,330) est simple alternance ou double alternance.

3. Générateur d'énergie électrique selon la revendication 1 ou 2, dont l'inductance comporte un bobinage (L) enroulé autour de ladite au moins une boucle conductrice et présentant une borne d'entrée et une borne de sortie ; la borne d'entrée (LA) est reliée à une masse du générateur ; la tension générée par le convertisseur est délivrée par la borne de sortie (LB).

4. Générateur d'énergie électrique selon la revendication 1 ou 2, dont l'inductance comporte deux bobinages (L1,L2) reliés en série, chacun étant enroulé autour de ladite au moins une boucle conductrice et comportant une borne d'entrée et une borne de sortie ; lesdites bornes d'entrée (L1A,L2A) sont reliées conjointement à une masse du générateur ; la tension générée par le générateur est délivrée par lesdites bornes de sortie (L1B,L2B).

5. Générateur d'énergie électrique selon la revendication 4, dont le redresseur est constitué principalement par deux diodes (D3,D4;D5,D6), reliées respectivement en série auxdites bornes de sortie (L1B,L2B).

6. Générateur d'énergie électrique selon l'une quelconque des revendications 1 à 5, dont ladite au moins une boucle conductrice (410) comporte un élément conducteur (84C) principalement en acier ou en aluminium, notamment constituant un élément d'armement d'une voie ferrée, ou encore constituant un élément de structure d'un véhicule roulant.

7. Générateur d'énergie électrique selon l'une quelconque des revendications 1 à 6, comportant en outre un dispositif (240) de protection contre les surtensions.

8. Alimentation électrique (100, 200, 300, 400, 500), comprenant :
un dispositif de stockage d'énergie électrique (60, 260),
un générateur d'énergie électrique (50, 250, 350) selon l'une quelconque des revendications 1 à 7, relié audit dispositif de stockage et apte à stocker dans celui-ci l'énergie électrique qu'il génère.

9. Alimentation électrique (100, 200, 300, 400, 500) selon la revendication 8, dont le dispositif de stockage (60) comprend un supercondensateur (260), un condensateur, ou une batterie (60).

10. Capteur (402, 502), comportant une alimentation selon la revendication 8 ou 9 assurant son alimentation en énergie.

11. Capteur (402, 502) selon la revendication 10, comportant en outre un émetteur (404) apte à émettre sans fil une information, par exemple par ondes électromagnétiques.

12. Véhicule roulant (506), notamment wagon pour voie ferrée, comportant un générateur d'énergie électrique selon l'une quelconque des revendications 1 à 7, ou une alimentation selon la revendication 8 ou 9, ou un capteur selon la revendication 10 ou 11.
